(19) Europäisches Patentamt
European Patent Office
Office européen des brevets

(11) Publication number: 0 299 086
A1

(12) # EUROPEAN PATENT APPLICATION

published in accordance with Art. 158(3) EPC

(21) Application number: 88901307.4

(51) Int. Cl.[3]: C 09 K 3/14

(22) Date of filing: 29.01.88

Data of the international application taken as a basis:

(86) International application number:
PCT/JP88/00076

(87) International publication number:
WO88/05802 (11.08.88 88/18)

(30) Priority: 29.01.87 JP 18912/87
29.01.87 JP 18913/87
14.03.87 JP 59866/87
15.04.87 JP 92689/87

(43) Date of publication of application:
18.01.89 Bulletin 89/3

(84) Designated Contracting States:
DE FR GB IT NL

(71) Applicant: MITSUI PETROCHEMICAL INDUSTRIES, LTD.
2-5, Kasumigaseki 3-chome Chiyoda-ku
Tokyo 100(JP)

(71) Applicant: NEC CORPORATION
33-1, Shiba 5-chome, Minato-ku
Tokyo 108(JP)

(72) Inventor: YAMAMOTO, Yohzoh
4-1, Yuhshuhdai-nishi 2-chome
Ichihara-shi Chiba 299-01(JP)

(72) Inventor: IWATA, Tadao
912, Shiinazaki-cho
Chiba-shi Chiba 280-02(JP)

(72) Inventor: FUJIMOTO, Jun
NEC Corporation 33-1, Shiba 5-chome
Minato-ku Tokyo 108(JP)

(72) Inventor: YAMAUCHI, Fumio
NEC Corporation 33-1, Shiba 5-chome
Minato-ku Tokyo 108(JP)

(74) Representative: Myerscough, Philip Boyd
J.A.Kemp & Co. 14, South Square Gray's Inn
London, WC1R 5EU(GB)

(54) **DAMPING MATERIAL COMPOSITIONS AND DAMPING MATERIALS.**

(57) A first damping material composition comprises (a-1) an epoxy resin, (b) a curing agent, and (c-1) a liquid polymer having in one molecule on the average 1.6 or more of at least one functional group selected from among carboxyl, acid anhydride, amino, amido, and mercapto groups capable of reacting with epoxy groups of the epoxy resin and having a glass transition point of up to 0°C. A second damping material composition comprises (a-2) an epoxy resin of polyglycidyl ether with polyol or its polymer, (b) a curing agent, and (c-2) an aromatic hydrocarbon, a phenol or polymer containing at least one of them as main component and having a softening point of up to 25°C. A third damping material composition comprises (I) an epoxy resin obtained by adding (c-3) a cyclic ester to (a-3) a bisphenol type epoxy resin in a weight ratio of (c-3) to (a-3) of 20/80 to 98/2, and (b) a curing agent. The equivalent ratio (b)/(I) of (I) said epoxy resin to (b) said curing agent is in the range of 0.6 to 1.4.

EP 0 299 086 A1

# TITLE

## VIBRATIONAL DAMPING COMPOSITIONS AND VIBRATIONAL DAMPERS

## FIELD OF THE INVENTION

This invention relates to epoxy resin based vibrational damping compositions and more particularly to vibrational damping compositions which are excellent in mechanical strength and service durability as well as in damping capacity and, moreover, which are less in the formation of volatile components even when used under the circumstances of high temperature and/or high vacuum.

The invention further relates to epoxy resin based vibrational dampers and more particularly to vibrational dampers which are excellent in mechanical strength and service durability as well as in damping capacity and, moreover, which are less in the formation of volatile components even when used under the circumstances of high temperature and/or high vacuum.

## BACKGROUND OF THE INVENTION

In order that vibrational from a source of vibration will not be transferred to other portions, it has heretofore been widely practiced to allow an antivibration rubber or air spring to stand at the contacting surface between the source of vibration and

other portions.
In these procedures, however, no attenuation of the vibration itself of the source of vibration can be expected, even though the transfer of the vibration can be inhibited.

On that account, there has been adopted a procedure wherein a vibrational damper is allowed to adhere to a vibrating body so as to attenuate the vibration itself of the vibrating body. In the case of using a vibrational damper in the manner mentioned above, the attenuation of the vibration is aimed at by converting the vibrational energy into heat.

In the case of inhibiting the vibration of a vibrating body using a vibrational damper, where the amplitudes of adjacent vibration in an attenuation sine wave are taken as $X_1$ and $X_2$, respectively, there is obtained more excellent vibrational inhibitory effect if a logarithmic decrement $\Delta$ represented by the following equation (1) becomes larger.

$$\Delta = \ln (X_1/X_2) \qquad \ldots(1)$$

The logarithmic decrement $\Delta$ is represented by the following equation (2) using a loss factor $\eta$.

$$\Delta = \pi \cdot \eta \qquad \ldots (2)$$

Accordingly, it can be said that a vibrational damper having a larger loss factor has excellent characteristics.

In using such a vibrational damper in practice, there are two cases, one wherein the vibrational damper is used by simply pasting it on a source of vibration (extensional type) and the other wherein the vibrational damper is used by inserting it between a source of vibration and a constraining plate (constrained shear type).

In the constrained shear damping material which is used by inserting it between the vibrating body and the constraining plate, a total loss factor $\eta$ of the vibrating body is represented approximately by the following equation (3).

$$\eta \doteq \frac{12 \dfrac{E_3 h_3}{E_1 h_3} \left( \dfrac{h_{31}}{h_1} \right)^2 g}{1 + 2g + (1 + \eta_2{}^2) g^2} \eta_2 \qquad \ldots (3)$$

wherein $E_1$ is Young's modulus of the vibrating body and $E_3$ is Young's modulus of the constraining plate, h1 is a

thickness of the vibrating body and $h_3$ is a thickness of the constraining plate, $h_{31}$ is equal to $h_2 + (h_1 + h_3)/2$, $h_2$ is a thickness of the vibrational damper, $\eta_2$ is a loss factor of the vibrational damper itself, and g is a shear parameter represented by the following equations (4) and (5).

$$g = \frac{fs}{f} , \quad \ldots(4)$$

$$fs = \frac{G_2 h_1}{4 E_3 h_3 h_2} \sqrt{\frac{E_1}{3 \rho_1}} \quad \ldots(5)$$

wherein $G_2$ is a shear modulus of the vibrational damper and

$\rho_1$ is a density of the vibrating body.

It is understood from the above-mentioned equations that preferable as the vibrational dampers are those having a large loss factor $\eta_2$ and a small shear modulus.

In addition to their being excellent in vibrational damping capacity as mentioned above, the vibrational dampers are required to have excellent moldability, mechanical strength, water resistance and

chemical resistance and, moreover, to be usable even under the circumstances of high temperature and high vacuum.

As vibrational damping compositions used for forming such vibrational dampers as mentioned above, there have heretofore been used polyamide type resins, polyvinyl chloride type resins or resins consisting essentially of epoxy resins.

However, vibrational dampers formed from the vibrational damping compositions comprising polyamide type resins as their principal components had such problems that the conditions under which the vibrational dampers are used are limited since they are poor in water resistance as well as in chemical resistance and, moreover, they are low in mechanical strength. Further, the vibrational damping compositions consisting essentially of polyvinyl chloride type resins had such problems that they are difficult to be formed into vibrational dampers having complicated shapes and, in addition thereto, that the production of vibrational dampers of many species but in small quantity requires a high cost of production. Still further, vibrational dampers formed from the vibrational damping compositions consisting essentially of epoxy type resins had such problems that when the vibrational dampers high in mechanical strength and excellent in service durability as

well as in moldability are intended to obtain, the vibrational dampers obtained are found to be poor in vibrational damping capacity and, on one hand, when the vibrational dampers excellent in vibrational damping capacity are intended to obtain, the vibrational dampers obtained are found to be low in mechanical strength and poor in service durability as well as in moldability.

In the case of vibrational dampers comprising amorphous epoxy resins, the dampers come to have a large loss factor η in the viscosity of a phase transition point (glass transition point or melting point), and hence it has been practiced to incorporate so-called plasticizers, i.e. low molecular weight organic fillers, into the epoxy resins so that a glass transition point of the epoxy resin approaches temperature at which the vibrational damper are used. However, in the case of vibrational dampers containing such plasticizers as conventionally used, when they are used, even after curing, under the circumstances of high temperature or high vacuum, there were observed such problems that the plasticizers volatize to cause changes in vibrational damping properties of the vibrational dampers, or the volatized plasticizers condense on the surface of another devices which are then contaminated therewith. Such problems as mentioned above still leave an ever-present anxiety even when the

vibrational dampers containing the conventional plasticizers are used at ordinary temperature and pressure over a long period of time.

The present invention is intended to solve such problems as mentioned above, and an object of the invention is to provide vibrational damping compositions and vibrational dampers which are less in the formation of volatile components even when used under the circumstances of high temperature and or high vacuum and accordingly are stable and have excellent vibrational damping capacity and, moreover, which are excellent in mechanical strength, service durability and moldability.

## DISCLOSURE OF THE INVENTION

The first vibrational damping compositions of the present invention are characterized by containing (a-1) an epoxy type resin, (b) curing agents and (c-1) liquid polymers having of which molecular contain more than 1.6 functional groups on the average capable of reacting with the epoxy group of the epoxy resin, said functional group being at least one selected from among carboxyly group, acid anhydride group, amino group, amide group and mercapto group, and having a glass transition temperature of less than $0^{o}C$.

The second vibrational damping compositions of the

present invention are characterized by comprising (a-2) an epoxy resin comprising polyglycidyl ether of polyol or its polymer, (b) a curing agent and (c-2) a compound having a softening point of less than 25°C, said compound consisting of aromatic hydrocarbons, phenols or oligomers containing as a principal component at least one member out of said aromatic hydrocarbons or phenols.

The third vibrational damping compositions of the present invention are characterized by comprising an epoxy resin (I) obtained by addition reaction of a bisphenol type resin (a-3) represented by the following general formula with a cyclic ester (c-3) at the (c-3)/(a-3) weight ratio of from 20/80 to 98/2, and a curing agent (b), wherein the (b)/(I) equivalent weight ratio of said epoxy resin (I) to said curing agent (b) is in the range of from 0.6 to 1.4.

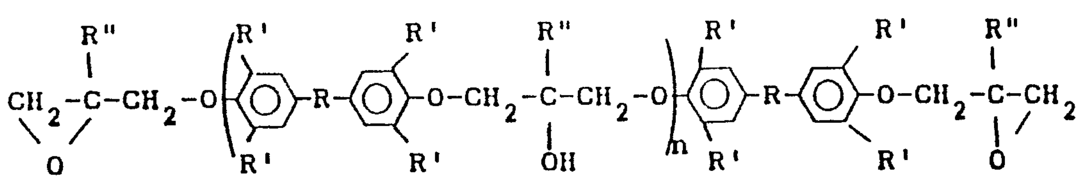

wherein R is $-CH_2-$, 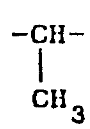 , 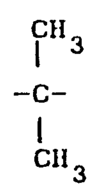 , 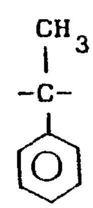 , 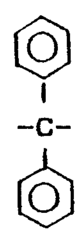 , 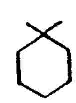 ,

```
        O
        ||
-O- or -S- , R' is hydrogen atom or halogen atom, R" is
        ||
        O
```

hydrogen atom or methyl and n is an integer of 1 or more, provided that parts of whole of the benzene rings may be hydrogenated.

vibrational dampers obtained by curing the vibrational damping compositions of the present invention as mentioned above are less in volatile components even when used at high temperature or high vacuum and accordingly have stable and excellent vibrational damping capacity and, moreover, are excellent in mechanical strength, service durability and moldability.

The first vibrational dampers of the present invention are those obtained by reacting (a-2) an epoxy resin comprising polyglycidyl ether of polyol or its polymer with (b) a curing agent, which are characterized by having a maximum value of loss factor $\eta$ being at least 1.3, a tensile strength at break, elongation and modulus in tension according to JIS K7113 being 0.05-3.0 kgf/mm$^2$, 20-300% and 0.1-5.0 kgf/mm$^2$, respectively, a compression strength according to JIS K6911 being 0.5 kgf/mm$^2$, and Izod notched impact strength according to JIS K6911 being at least 5 kgf cm/cm or not broken.

The vibrational dampers of the present invention have excellent vibrational damping capacity and are

excellent in mechanical strength, service durability and moldability and, in addition thereto, they are less in the formation of volatile components and stable even when used at high temperature and/or high vacuum.

## BRIEF DESCRIPTION OF THE DRAWINGS

Fig. 1 is a diagram to show the relation between phase difference $\delta$, dynamic storage elastic modulus E', dynamic loss elastic modulus E" and complex elastic modulus $E^*$ of vibrational damper.

## BEST MODE FOR PRACTICING THE INVENTION

The vibrational damping compositions and vibrational dampers of the present invention are illustrated below in detail.

The first vibrational damping compositions of the present invention contain (a-1) epoxy type resin, (b) curing agents, (c) specific liquid polymers and, if necessary, plasticizer or fillers.

Usable as the epoxy resins (a-1) are polyglycidyl ethers, polyglycidyl esters, cyclic aliphatic epoxy resins, glycidylamines, etc. Concretely, useful polyglycidyl ethers include glycidyl ethers of bisphenol A, bisphenol F, bisphenol AD[1,1-bis(4-hydroxyphenyl)-1-phenylethane], 1,1-bis(4-hydroxyphenyl)-1-phenylethane

1,1-bis(4-hydroxyphenyl)cyclohexane, 2,2-bis(4-hydroxyphenyl)butane, 2,2-bis(4-hydroxyphenyl)-4-methylpentane, hydrogenated bisphenol A and polyvalent phenol, or bromination products thereof. Useful polyglycidyl esters include phthalic acid diglycidyl ester, tetrahydrophthalic acid diglycidyl ester, etc. Useful cyclic aliphatic epoxy resins include alicyclic diepoxy acetal, alicyclic diepoxy adipate, vinylcyclohexene dioxide, etc. Useful glycidylamines include N,N-diglycidyl aniline, tetraglycidyl diaminophenyl methane, etc.

Usable as the curing agents (b) are amines, acid anhydrides, polyamides, dicyandiamide, Lewis acid and its complexes. Concretely, useful amines include N-aminoethyl piperazine, diethylenetriamine, triethylenetetramine, trimethylhexamethylenediamine, isophoronediamine, metaxylenediamine, metaphenylenediamine, diaminodiphenylmethane, etc. Useful acid anhydrides include phthalic anhydride, trimellitic anhydride, methyltetrahydrophthalic acid anhydride, dodecenyl succinic acid anhydride, ethylene glycol bis(anhydrotrimellitate), maleic anhydride, etc. Useful polyamides include condensates of dimer acid with polyamines, organic acid dihydrazines, etc. Useful Lewis acid and its complexes include boron trifluoride, tin

 

tetrachlodie, aluminum trichloride and tetriary amine complexes thereof.

The liquid polymer (c-1) used in the present invention has in the molecule on the average more than 1.6 preferably 1.8 functional groups capable of reacting with the epoxy group of the epoxy type resin (a-1), said functional group being at least one selected from among carboxyl group, acid anhydride radical, amino group, amide group and mercapto group, and has a glass transition temperature of less than 0°C.

In such liquid polymer (c-1) as mentioned above, the aforesaid carboxyl group, acid anhydride radical, amino group, amide group or mercapto group may be positioned at the terminal of the molecule or at random.

Concretely, the above-mentioned liquid polymers include such compounds as mentioned below.

(i) 1,4-Polybutadiene, 1,2-polybutadiene, polyisoprene, polyisobutylene, styrene/butadiene copolymer and butadiene/acrylonitrile copolymer each having a carboxyl or amino group at the terminal of the molecule.

(ii) Butadiene/acrylonitrile copolymers having in the molecule carboxyl group at random.

(iii) Oligomers of α-olefin or ethylene/α-olefin copolymers on which maleic anhydride, acrylic acid of the like has been graft polymerized.

(iv) Oligomers of ethyl ether polysulfide, oligomers of ethyl formal polysulfide, and oligomers of hexamethylene polysulfide, each having a mercapto group at the terminal of the molecule.

The glass transition temperature of the liquid polymers (c-1) is the value as measured by measuring a sample of 10-20 mg with a differential scanning calorimeter under the condition of a heating rate of $10^{o}C/min$.

The above-mentioned liquid polymers (c-1) preferably have a viscosity of about 10-1,000,000 cps at ordinary temperature ($27^{o}C$).

In the first vibrational damping compositions of the present invention, the curing agent (b) and liquid polymer (c-1) are used in such an amount that the sum total of the functional groups capable of reacting with the epoxy groups contained both in the curing agent (b) and the liquid polymer (c-1), amounts to 0.6-1.4, preferably 0.8-1.2 equivalents based on one epoxy equivalent of the epoxy resin (a-1).

With regard to the use of the curing agent (b) and liquid polymer (c-1) in the vibrational damping compositions of the present invention, it is desirable that when the vibrational dampers obtained from the present vibrational damping compositions are used at lower

temperatures, the amount of the liquid polymer (c-1) used is increased to lower the glass transition temperature of said vibrational dampers.

The second vibrational damping compositions of the present invention are illustrated hereinafter.

The second vibrational damping compositions of the present invention comprise (a-2) an epoxy resin comprising polyglycidyl ether of polyol or its polymer, (b) a curing agent and (c-2) a compound having a softening point of less than 25°C, said compound consisting of aromatic hydrocarbons, phenols or polymers containing as a principal component at least one member out of said aromatic hydrocarbons or phenols.

The epoxy resin (a-2) is polyglycidyl ether of polyol or its polymer as mentioned above. Concretely, useful epoxy resins include such compounds as mentioned below.

(i) Glycidyl ethers of such polyols of 2 to 15 carbon atoms such as ethylene glycol, diethylene glycol, triethylene glycol, polyethylene glycol, propylene glycol, dipropylene glycol, tripropylene glycol, polypropylene glycol, 1,2-butylene glycol, 1,3-butylene glycol(1,4-butylene glycol) di(1,4-butyleneglycol), poly(1,4-butyleneglycol), neopentyl glycol, 1,6-hexane glycol, di(6-hydroxyhexyl)ether, 1,8-octanediol, di(8-

hydroxyoctyl)ether, 1,10-decanediol, di(10-hydroxydecyl)ether, phenylethylene glycol, and di(phenyethyleneglycol).

(ii) Glycerol triglycidyl ether, polyglycerol polyglycidyl ether, trimethylolpropane diglycidyl ether, etc.

(iii) Triglycidyl ether of propylene oxide adduct of trimethylolpropane, triglycidyl ether of propylene oxide adduct of pentaerythritol, etc.

Useful as the curing agent (b) are curing agents similar to those used in the first vibrational damping compositions of the present invention.

The compound (c-2) used in the present invention, which has a softening point of less than 25°C and which consists of aromatic hydrocarbons, phenols or polymers containing as a principal component at least one member out of said aromatic hydrocarbons of phenols includes such compounds as mentioned below.

(i) Aromatic hydrocarbons having a softening point of less than 25°C, such as toluene, xylene, styrene, $\alpha$-methyl-styrene, divinylbenzene, ethylenexene, etc. or mixtures thereof.

(ii) Phenols having a softening point of less than 25°C, such as cresols, vinylphenols, propylphenols, butylphenols, octylphenols, nonylphenols, dinonylphenols,

dimethoxy-4-methylphenol, etc. or mixtures thereof.

(iii) Condensates of the above-mentioned aromatic hydrocarbons, phenols or mixtures containing as a principal component at least one member out of said aromatic hydrocarbons or phenols with formaldehyde, said condensates having a softening point of less than 25°C.

(iv) Polymers of the above-mentioned aromatic hydrocarbons, phenols or mixtures containing as a principal component at least one member out of said aromatic hydrocarbons or phenols, said polymers having a softening point of less than 25°C.

In the second vibrational damping compositions of the present invention, the curing agent (b) is used in such an amount that the functional groups capable of reacting with the epoxy group contained in the curing agent (b) amounts to 0.6-1.4, preferably 0.8-1.2 equivalents based on one equivalent of the epoxy group contained in the above-mentioned epoxy resin (a-2).

Furthermore, the compound (c-2) is used in an amount of 30-900, preferably 50-500 parts by weight based on 100 parts by weight of the sum of the epoxy resin (a-2) and curing agents (b).

The third vibrational damping compositions of the present invention are illustrated hereinafter.

The third vibrational damping compositions of the

present invention are characterized by comprising an epoxy resin (I) obtained by addition reaction of a bisphenol type epoxy resin (a-3) represented by the following general formula with a cyclic ester (c-3) at the (c-3)/(a-3) weight ratio of from 20/80 to 98/2, and a curing agent (b), wherein the (b)/(I) equivalent weight ratio of said epoxy resin (I) to said curing agent (b) is in the range of from 0.6 to 1.4.

The bisphenol type epoxy resins (a-3) are represented by the following formula.

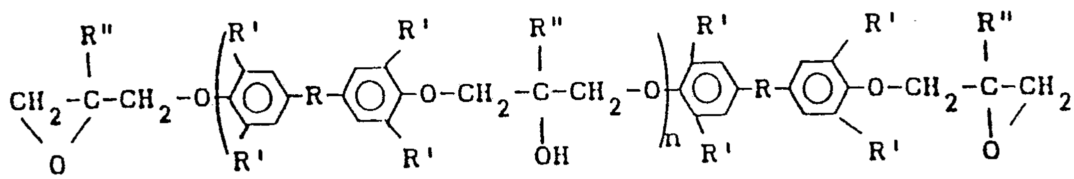

wherein R is 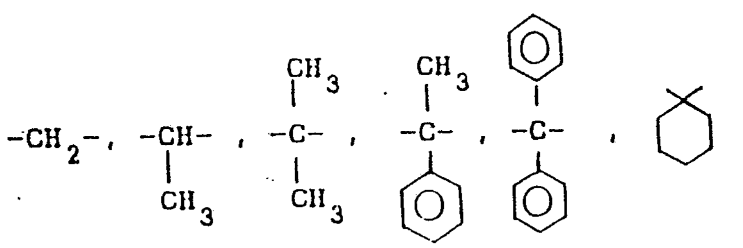 ,

-O- or 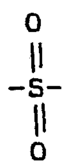 , R' is hydrogen atom or halogen atom, R" is hydrogen atom or methyl and n is an integer of 1 or more, provided that parts or whole of the benzene rings may be hydrogenated.

The bisphenol type epoxy resins (a-3) as

illustrated above are obtained by glycidylation of bisphenols or hydrogenated bisphenols with epichlorohydrin or β-methylepichlorohydrin. The bisphenols of hydrogenated bisphenols used in that case are concretely bisphenol A, bisphenol F, 1,1-bis(4-hydroxyphenyl)ethane, 1,1-bis(4-hydroxyphenyl)cyclohexane, 1,1-bis(4-hydroxyphenyl)-1-phenylethane, bis(4-hydroxyphenyl)diphenylmethane, bis(4-hydroxyphenyl)sulfone, bis(4-hydroxyphenyl)ether or 2,6-dihalides or hydrogenated compounds thereof.

The cyclic esters (c-3) used in the above case are cyclic esters of 3 to 20 carbon atoms, for example, β-propiolactone, δ-valerolactone, ε-caprolactone, etc.

The epoxy resin (I) used in the present invention is obtained by grafting on the above-mentioned bisphenol type epoxy resin (a-3) an oligomer of the cyclic ester (c-3) through ring opening polymerization of said cyclic ester, starting from the hydroxyl group in the bisphenol type epoxy resin (a-3) as a site of initiation of polymerization reaction.

The conditions under which the above-mentioned epoxy resin (I) is synthesized from the aforesaid bisphenol type epoxy resin (a-3) and cyclic ester (c-3) are as follows.

This reaction is carried out at about 100-250°C,

preferably about 120-200 C, in the presence or absence of catalysts and innert solvents therefore.

Useful catalysts include organic or inorganic titanium compounds such as tetrabutyl titanate, tetraethyl titanate, butoxytitanium chloride and titanium tetrachloride; organic or inorganic aluminum compounds such as triethyl aluminum, ethyl aluminum chloride and aluminum trichloride; organic or inorganic zinc compounds such as diethyl zinc and zinc chloride; organic or inorganic tin compounds such as dibutyl tin laurate and stannous chloride; acids such as boron trifluoride, p-toluenesulfonic acid and phosphoric acid; alkali metals or complexes thereof such as lithium, sodium, sodium naphthalene and potassium benzophenone; alkali metal hydroxides such as lithium hydroxide and sodium hydroxide; alkali metal salts such as sodium carbonate and lithium acetate; alkali metal hydrides such as lithium hydride and sodium hydride; and tertiary amines such as triethylamine and pyridine. The basic catalysts can serve both as a catalysts for the synthesis of the epoxy resin (a-3) by addition polymerization and as catalysts for the subsequent ring opening addition reaction of lactone.

These catalysts are exemplified above are used, , based on the epoxy resin (a-3), in an amount of about 0.01-5000 ppm, preferably

about 0.1-1000 ppm.

The innert solvents, if used, are toluene, xylene, etc. Unusable as the solvents in that case are such compounds as having an active hydrogen with which the cyclic ester and (c-3) and epoxy group can react, or an ester group having the possibility of its bringing about transesterification.

In connection with the reaction temperature as aforesaid, it is undersirable to employ the temperature of less than 100°C , because the rate of reaction becomes low and, on one hand, it is also undersirable to use the temperature exceeding 250°C, because there is the possibility of deteriorating the resulting epoxy resin (I).

The curing agents (b) to be used are curing agents which are similar to those used in the first vibrational damping compositions of the present invention.

In practicing the addition reaction of the bisphenol type resin (a-3) with the cyclic ester (c-3), the (c-3)/(a-3) weight ratio is preferably from 20/80 to 98/2. By virtue of changing this (c-3)/(a-3) ratio, it is possible to control the glass transition temperature of the resulting cured product (vibrational damping material).

In the third vibrational damping compositions of

the present invention, the equivalent weight reaction of the epoxy resin (I) to the curing agent (b) is preferably such that the (b)/(I) ratio is from 0.6 to 1.4, preferably from 0.8 to 1.2.

In the third vibrational damping compositions of the present invention, it is also possible to incorporate into the vibrational damping compositions such reactive diluents as monoepoxy resins, etc. or reactive plasticizers such as butadiene/acrylonitrile oligomers having carboxy terminals, polysulfide oligomers having mercaptan terminals, etc. for the purpose of controlling a viscosity of the resin compositions prior to curing said compositions or controlling a glass transition temperature of the cured products obtained after the curing of the resin compositions, if they are used in such amounts that no characteristics of the resulting vibrational damping compositions are marred.

Any of the vibrational damping compositions of the present invention as illustrated above can also be incorporated with inorganic or organic fillers, if necessary, in order to improve mechanical strength of vibrational dampers obtained by curing said vibrational damping compositions. Useful inorganic fillers include mica, glass flake, scaly iron oxide, asbestos, etc., and useful organic fillers include synthetic pulp, polyamide

 

fiber, carbon fiber, polyester fiber, etc.

In preparing vibrational dampers from the vibrational damping compositions, of the present invention, the epoxy resins as mentioned above, the curing agent (b) and, if necessary, plasticizers of fillers are thoroughly mixed together in the usual ways and if necessary in a vacuum of about 1-100 torr to prepare vibrational damping compositions, followed by an ordinary molding method wherein the vibrational damping compositions thus prepared are defoamed and then cured at temperature up to about 200°C to obtain the vibrational dampers of desired shapes.

The first vibrational dampers of the present invention are illustrated hereinafter.

The first vibrational dampers of the present invention are obtained by reacting the above-mentioned epoxy resin (a-2) comprising polyglycidyl ether of polyol or its polymer with the curing agent (b), and are characterized in that said vibrational dampers have a maximum value of loss factor $\eta$ being at least 1.3, a tensile strength at rupture, elongation and elastic modulus in tension according to JIS K7113 being 0.05-3.0 kgf/mm$^2$, 20-300% and 0.1-5.0 kgf/mm$^2$, respectively, a compression strength according to JIS K6911 being 0.5 kgf/mm$^2$, and Izod impact strength

according to JIS K6911 being at least 5 kgf cm/cm or being not reptured.

The epoxy resin (a-2) comprising polyglycidyl ether of polyol or its polymer, which is used in the above case, is the same as that used in the second vibrational damping compositions of the present invention as mentioned above.

Furthermore, the curing agent (b) is used in the above case is the same as that used in the first vibration damping compositions of the present invention as mentioned above.

This curing agent (b) is used in such an amount that the functional group in the curing agents, which reacts with the epoxy group in the above-mentioned epoxy resin (a-2), becomes 0.6-1.4, preferably 0.8-1.2 equivalents based on one equivalent of the epoxy group contained in said epoxy resin (a-2).

In order to improve their mechanical strength, the vibrational dampers of the present invention may be incorporated, if neçessary, with inorganic or organic fillers. Useful inorganic fillers include mica, glass flake, scaly iron oxide, asbestos,etc., and useful organic fillers include synthetic pulp, polyamide fiber, carbon fiber, polyesters fiber, etc.

The vibrational dampers of the present invention

and vibrational damping materials of obtained by curing the vibrational damping compositions of the present invention are used concretely as vibrational damping parts for ships, automobiles, etc., components for man-made planets or rockets, vibrationproof tables for electron microscopes, and components for acoustic apparatues, OA devices, etc.

## EFFECT OF THE INVENTION

The vibrational damping materials obtained by curing the first to third vibrational damping compositions of the present invention as illustrated above are excellent in damping capacity, less in the formation of volatile components even when used at high temperature and/or high vacuum and accordingly have stable and excellent damping capacity and, moreover, they are excellent in mechanical strength, service durability and moldability.

The first vibrational dampers of the present invention have excellent capacity and are excellent in mechanical strength, service durability and moldability and, moreover, they are excellent in stability as being less in the formation of volatile components even when used at high temperature and/or high vacuum.

The present invention is illustrated below with reference to examples, but it should be construed that the

invention is in no way limited to those examples.

Example 1

A mixture was obtained by thoroughly mixing together 100 g of a bisphenol A type resin having an epoxy equivalent of 188 g/equiv., 200 g of a butadiene/acrylonitrile copolymer having carboxylic acid at the terminal of the molecule (the acrylonitrile content 27% by weight, glass transition temperature -52°C, viscosity 630,000 cps/27°C, average content of carboxylic acid per molecule 1.85 equiv./molecule) 102 g of dodecenyl succinic anhydride and 1 g of 2,4,6-tris (dimethylaminomethyl)phenol. After defoaming, the mixture was cured under the curing conditions of 120°C x 3 hr to prepare a square column vibration damper of 1/2 inch x 1/2 inch x 5 inches.

Using a part of the thus obtained vibrational damper, a loss factor $\eta$ and volatile components of the vibration damper were measured under the conditions as mentioned below.

(Conditions under which the loss factor $\eta$ of the vibrational damper is measured)

Instrument: High-frequency viscoelasticity spectrometer, manufactured and sold by Iwamoto Seisakusho K.K.

Temperature: 25°C; sample, 2 mm width x

1 mm thick x 5 mm length

Frequency: 400 Hz

Method of measurement and Principle: In the case where one end of a sample is fixed to the instrument and the other end is intended to vibrate in the lengthwise direction of the sample, no measurement can be conducted in the direction toward which the sample shrinks, because the sample sags. Therefore, at the outset, the sample is stretched to a given extent, and the measurement is conducted while applying dynamic displacement centering around the streched point of the sample. This stretch given at the outset is called an initial strain ($L_s$) and a tension produced at the time when the initial strain is given is called an initial tension ($F_s$).

When an amplitude ($\Delta L_{o-p}$) of the dynamic displacement becomes larger than the initial strain, the sample sags and the measurement intended comes to inoperable, and hence this should be brought to attention at the time when the measurement is conducted.

Complex elastic modulus (Young's modulus): $E^*$ (dyne/cm$^2$) is calculated according to the following equation by using dynamic displacement : $\Delta L_{o-p}$ (cm), dynamic force which is produced by applying the dynamic displacement to the sample : $\Delta F_{o-p}$ (dyne), length of the sample natural length L (cm) prior to applicaton of the

initial strain to said sample, cross-sectional area of the sample : A ($cm^2$), phase difference (deg) between the dynamic displacement and dynamic force, and frequency of vibration (Hz).

$$E^* = \frac{\text{vibrating stress}}{\text{vibrating strain}} = \frac{(\Delta F_{o-p}/A)\ e^{i(\omega t+\delta)}}{(\Delta L_{o-p}/L)\ e^{i\omega t}}$$

$$= (\Delta F_{o-p}/\Delta L_{o-p}) \ . \ (L/A) \ . \ (\cos\delta + i \sin\delta)$$

Assuming $|E^*| = (F_{o-p}/L_{o-p}) \cdot (L/A) \cdot (\cos\delta + i \sin\delta)$,

| | |
|---|---|
| Dynamic storage elastic modulus | $E' = \|E^*\| \cos\delta$ (dyne/$cm^2$) |
| Dynamic loss elastic modulus | $E'' = \|E^*\| \sin\delta$ (dyne/$cm^2$) |
| Dynamic viscosity coefficient | $\eta = E'' / \omega$ (poise) |
| Dissipation factor | $\tan\delta = E'' / E' = \eta$ |
| | $\omega = 2\lambda f$ |
| | f =frequency (Hz) |

As can be seen from the foregoing, the initial strain and initial tension do not participate in the calculation as illustrated above. The relation between E', E", $E^*$ and becomes as shown in Fig. 1.

In accordance with the procedure as stipulated in

ASTM E595-77, there were obtained TML (Total Mass Loss) at 125°C x $10^{-6}$ torr x 24 hours and CVCM (collected volatile condensable materials).

Further, resistance to chipping on bending of the sample was determined by bending the above-mentioned square column sample until the angles of both ends of the sample become 90° to examine as to whether the sample fracture or not. When no fracture occurred, the tested sample was determined to come up to the standard.

Vibration-damping properties of a vibrational damper, when it was assembled as a constrained type vibration to a vibrating body, was measured by the following procedure. That is, a sample of constrained shear damping material of a sandwich structure was prepared by fitting to an aluminum vibrating plate of 300 mm length, 30 mm width and 5 mm thick a vibrational damper of 3 mm thick having the same area as in the vibrating plate and an aluminum constraint plate of 2 mm thick having the same area as in the vibrating plate, and a loss factor $\eta$ of the sample was measured at a temperature of 25°C and a vibration frequency of 400 Hz.

The results obtained are shown in Table 1.

<u>Examples 2-6</u>

Example 1 was repeated except that in place of the butadiene/acrylonitrile copolymer having carboxylic acid

at the terminal of the molecule used in Example 1, there were used such liquid polymers as shown in Table 1 and the amount of the dodecenyl succinic anhydride used in Example 1 was changed as shown in Table 1.

The results obtained are shown in Table 1.

Table 1

| Example | Liquid polymer: Kind | Loadings (g) | Glass transition temperature (°C) | Viscosity | Numbere average molecular weight | Number of functional groups per molecule | Dodecenyl succinic anhydride (g) |
|---|---|---|---|---|---|---|---|
| 1 | Butadiene/acrylonitrile copolymer (acrylonitrile content 27 wt.%) having carboxylic acid at the terminal of molecule | 200 | -52 | 630,000cps/ 27°C | about 3500 | 1.8 | 108 |
| 2 | Butadiene/acrylonitrile copolymer (acrylonitrile content about 17 wt.%) having the group (1) at the terminal of molecule | 200 | -58 | 170,000cps/ 27°C | about 3500 | 3.6 | 78 |
| 3 | Liquid polybutadiene having carboxylic acid at the terminal of molecule | 100 | -40 | 35,000cps/ 27°C | about 4000 | 1.8 | 167 |
| 4 | Liquid polyisobutylene having carboxylic acid at the terminal of molecule | 100 | -71 | - | about 1800 | 1.8 | 103 |
| 5 | Ethylene/propylene copolymer grafted with maleic anhydride | 100 | -63 | - | about 1600 | 1.8 | 112 |
| 6 | Polymer represented by (2) | 100 | -52 | 1,200cps/ 25°C | about 1000 | 2.1 | 77 |
| 6-2 | Butadiene/acrylonitrile copolymer (acrylonitrile content 25 wt.%) having SH group at the terminal of molecule | 200 | -52 | - | about 2500 | 1.8 | 93 |

(1)

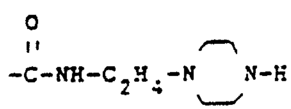

(2)

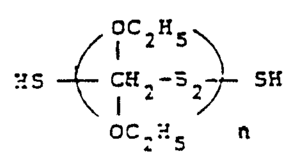

Table 1 (continued)

| Example | Physical properties of vibrational damper obtained by curing vibrational damping composition | | | | $\eta_s$ of the vibrational damper when used as a constraint type vibrational damper |
|---|---|---|---|---|---|
| | $\eta$ | Resistance to chipping | TML (wt.%) | CVCM (wt.%) | |
| 1 | 1.1 | Came up to standard | 3.2 | 0.6 | 0.4 |
| 2 | 1.2 | Came up to standard | 3.5 | 0.7 | 0.5 |
| 3 | 1.1 | Came up to standard | 3.1 | 0.5 | 0.4 |
| 4 | 1.3 | Came up to standard | 3.1 | 0.5 | 0.5 |
| 5 | 1.2 | Came up to standard | 3.4 | 0.7 | 0.5 |
| 6 | 1.3 | Came up to standard | 3.0 | 0.5 | 0.5 |
| 6-2 | 1.1 | Came up to standard | 3.1 | 0.5 | 0.4 |

Examples 7-8

Example 6 was repeated except that in place of the dodecenyl succinic anhydride used as the curing agent in Example 6, there were used curing agents other than said curing agent. In Example 8, however, there was not used 2,4,6-tris(dimethylaminomethyl)phenol.

The results obtained are shown in Table 2.

Comparative Example 1

Example 1 was repeated except that no liquid polymer was used.

The results obtained are shown in Table 3.

Comparative Example 2

Example 1 was repeated except that in place of the liquid polymer, there was used an aromatic polymerized oil (glass transition temperature -20°C, number average molecular weight about 320) as a plasticizer.

Comparative Example 3

This example shows the case of using a polymer having its glass transition temperature higher than 0°C as the liquid polymer.

Example 1 was repeated except that in place of the butadiene/acrylonitrile copolymer having carboxylic acid at the terminal of the molecule, there were used 50 g of a styrene/maleic anhydride copolymer (glass transition temperature 80°C, number average molecular weight about

1000, acid value 480, number of functional groups per molecule 6 as obtained from the acid value) and 25 g of dodecenyl succinic anhydride.

The results obtained are shown in Table 3.

Table 2

| | Curing agent | | Physical properties of cured product | | | | $\eta$s of the Vibrational damper when used as a constraint type vibrational damper |
|---|---|---|---|---|---|---|---|
| | Kind | Loadings(g) | $\eta$ | Resistance to chipping | TML(wt.%) | CVCM(wt.%) | |
| Example 7 | 4-Methyl-1,2,3,6-tetrahydrophthalic anhydride | 48 | 1.1 | Came up to standard | 3.0 | 0.5 | 0.4 |
| Example 8 | Polyamideamine (a product of Mitsui petrochemical Industries,Ltd.,Q-654) | 32 | 1.3 | Came up to standard | 2.9 | 0.4 | 0.5 |

Table 3

| | Physical properties of cured product | | | | $\eta_s$ of the vibrational damper when used as a constraint type vibrational damper |
|---|---|---|---|---|---|
| | $\eta$ | Resistance to chipping | TML(wt.%) | CVCM(wt.%) | |
| Comparative Example 1 | 0.02 | Did not come up to standard | 3.0 | 0.4 | less than 0.01 |
| Comparative Example 2 | 1.3 | Did not Come up to standard | 18.2 | 3.5 | 0.5 |
| Comparative Example 3 | 0.03 | Did not Come up to standard | 3.1 | 0.5 | less than 0.01 |

Example 9

A vibrational damping composition was prepared by thoroughly mixing at room temperature 100 g of 1,6-hexanediol diglycidyl ether having an epoxy equivalent 150 g/equiv. with 100 g of a condensate of xylene with formaldehyde (average molecular weight 400, liquid at 25°C, and viscosity of 750 cps/50°C) and 100 g of a curing agent obtained by adding 1 part by weight of 2,4,6-tris(dimethylaminomethyl)phenol to 100 parts by weight of 4-methyl-1,2,3,6-tetrahydrophthalic anhydride.

The vibrational damping composition thus obtained was cured under the curing conditions of 120°C x 3 hrs, to prepare a vibrational damper. The vibrational damper thus obtained was measured for loss factor $\eta$, Izod impact strength and resistance to chipping on bending in the same manner as in Example 1.

The results obtained are shown in Table 4.

Examples 10-15

Example 9 was repeated except that in place of the 1,6-hexanediol diglycidyl ether, there were used such epoxy resins as shown in Table 4.

The results obtained are shown in Table 4.

Table 4

| Example | Epoxy resin | | Amount of curing agent used (g) | $\eta_{max}$ | $(T\eta)_{max}$ (°C) | $(\eta_s)_{max}$ | Izod impact strength (kgf/mm²) | Resistance to chipping |
|---|---|---|---|---|---|---|---|---|
| | Kind | epoxy equivalent (g/equivalnet) | | | | | | |
| 9 | 1,5-Hexanediol diglycidyl ether | 150 | 100 | 2.0 | 20 | 0.76 | Not ruptured | Came up to standard |
| 10 | Diethylene glycol diglycidyl ether | 195 | 78 | 2.1 | 25 | 0.79 | " | " |
| 11 | Dipropylene glycol diglycidyl ether | 172 | 88 | 2.3 | 20 | 0.88 | " | " |
| 12 | Tripropylene glycol diglycidyl ether | 180 | 84 | 2.2 | 10 | 0.83 | " | " |
| 13 | Glycerol polyglycidyl ether | 145 | 104 | 2.0 | 10 | 0.74 | " | " |
| 14 | Diglycerol polyglycidyl ether | 155 | 98 | 2.1 | 5 | 0.79 | " | " |
| 15 | Polytetramethylne glycol diglycidyl ether | 557 | 27 | 2.2 | -5 | 0.84 | " | " |

Example 16

Example 9 was repeated except that in place of the curing agent used in Example 11, there was used 140 g of a curing agent obtained by adding 1 part by weight of 2,4,6-tris(dimethylaminomethyl)phenol to 100 parts by weight of dodecenylsuccinic anhydride.

The results obtained are shown in Table 5.

Example 17

Example 16 was repeated except that in place of the epoxy resin used in Example 16, there was used a mixture of 50 g of dipropylene glycol diglycidyl ether and 50 g of tripropylene glycol diglycidyl ether, and the amount of the curing agent used in Example 16 was changed to 136 g.

The results obtained are shown in Table 5.

Example 18

Example 17 was repeated except that the amount of the curing agent used in Example 16 was changed to 106 g.

The results obtained are shown in Table 5.

Examples 19-20

The present examples show the cases wherein curing agents other than acid anhydrides were used. Example 12 was repeated except that the kind and amount of the curing agent used in Example 12 were changed as shown in Table 6.

The results obtained are shown in Table 6.

Table 5

| Example | $\eta_{max}$ | $(T\eta)_{max}$ (°C) | $(\eta_s)_{max}$ | Izod impact strength ($kgf/mm^2$) | Resistance to to chipping |
|---|---|---|---|---|---|
| 16 | 2.1 | 5 | 0.79 | Not ruptured | Came up to standard |
| 17 | 2.1 | 0 | 0.80 | Not ruptured | Came up to standard |
| 18 | 2.3 | −15 | 0.86 | Not ruptured | Came up to standard |

Table 6

| Example | Hardened oil | | $\eta_{max}$ | $(T\eta)_{max}$ (°C) | $(\eta_s)_{max}$ | Izod impact strength ($kgf/mm^2$) | Resistance to chipping |
|---|---|---|---|---|---|---|---|
| | Kind | Amount used (g) | | | | | |
| 19 | Aromatic amine Q-643 (a product of Mitsui Petrochemical Industries, Ltd.) | 26 | 2.1 | -5 | 0.79 | Not ruptured | Came up to standard |
| 20 | Polyamideamine Q-654 (a product of Mitsui Petrochemical Industries, Ltd.) | 56 | 2.0 | -35 | 0.75 | Not ruptured | Came up to standard |

Examples 21-25

Example 11 was repeated except that in place of the condensate of xylene with formaldehyde used as the compound (c) in Example 11, there were used compounds other than said condensate.

The results obtained are shown in Table 7.

Table 7

| Example | Compound (c) | | | | $\eta_{\ell max}$ | $(T_{\eta})_{max}$ | $(\eta_s)_{max}$ | Izod impact strength (kgf/mm$^2$) | Resistance to chipping |
|---|---|---|---|---|---|---|---|---|---|
| | Kind | Number average molecular weight | Softening point (°C) | Viscosity | | | | | |
| 21 | Isopropenyl toluene polymer | 300 | less than 25 | - | 1.9 | 35 | 0.71 | Not ruptured | Came up to standard |
| 22 | White Tarcron 303 (a product of Yoshida Seiyu-Sho) | - | less than 25 | 2000cps/25°C | 2.2 | 25 | 0.83 | Not ruptured | Came up to standard |
| 23 | Phenol-modified aromatic polymerized oil | - | less than 25 | 500cps/25°C | 2.4 | 20 | 0.90 | Not ruptured | Came up to standard |
| 24 | Tricyclodecene/toluene polymer | 270 | less than 25 | 3000cps/25°C | 2.0 | 30 | 0.75 | Not ruptured | Came up to standard |
| 25 | Nonylphenol | 220 | less than 25 | 2100cos/29°C | 2.3 | 20 | - | Not ruptured | Came up to standard |

Comparative Example 4

This example shows the case wherein the compound (c) was not used. Example 11 was repeated except that the condensate of xylene with formaldehyde used in Example 11 was not used.

The results obtained are shown in Table 8.

Comparative Example 5

This example shows the case wherein the vibrational damper obtained was found to be poor in damping capacity when a compound other than the compounds specified in the present invention was used.

Example 19 was repeated except that in place of the condensate of xylene with formaldehyde, there was used dioctyl phthalate.

The results obtained are shown in Table 8.

It is understood from this example that the vibrational damper obtained herein is rather poorer in damping capacity than the vibrational damper of Comparative Example 4, in which the compound (c) was not used.

Table 8

| Comparative Example | $\eta_{max}$ | $(T\eta)_{max}$ (°C) | $(\eta s)_{max}$ | Izod impact strength (kgf/mm$^2$) | Resistance to to chipping |
|---|---|---|---|---|---|
| 4 | 1.7 | 50 | 0.53 | Not ruptured | Came up to standard |
| 5 | 1.2 | 20 | 0.45 | Not ruptured | Came up to standard |

Example 26

[Synthesis of epoxy resin (I)]

Into a 5-liter separable flask equipped with a stirring device, a thermometer and a reflux condenser were charged 2000 g of bisphenol A type epoxy resin (epoxy equivalent 188), 563 g of bisphenol A and 300 g of xylene, followed by elevating the temperature up to 70°C. Into the flask was then charged a 0.1 N aqueous sodium hydroxide solution so that the concentration of sodium hydroxide in the charged mass becomes 20 ppm in terms of sodium, followed by further elevating the temperature up to 120°C. Subsequently, the system was evacuated and the xylene and water were removed by vacuum distillation, and thereafter the system was filled with nitrogen gas and the charged mass was heated at 170°C to effect the reaction for 4 hours.

Successively, 100 g of ε-caprolactone was added to the system, and the reaction was continued at 170°C.

The ε-caprolactone modified epoxy resin (I) thus obtained had an epoxy equivalent of 690. The content of unreacted ε-caprolactone in the resin was 0.27% by weight as measured by gas chromatography.

[Preparation of cured product for vibrational damper]

To 100 g of the ε-caprolactone modified epoxy resin (I) obtained in the manner mentioned above was added

22 g of the curing agent (b) prepared by adding 1 part by weight of 2,4,6-tris(dimethylaminomethyl)phenol to 100 parts by weight of 4-methyl-1,2,3,6-tetrahydrophthalic anhydride, and thoroughly mixed at room temperature, followed by defoaming. The modified epoxy resin (I) thus treated was cured by heating at 120°C for 3 hours to obtain a cured product for vibration damper.

The cured product thus obtained was measured for vibrational damping properties and the like in the same procedure as in Example 1.

The results obtained are shown in Table 9.

Example 27

The modified epoxy resin (I) having an epoxy equivalent of 960 was prepared by repeating Example 26 except that the amount of ε-caprolactone used therein was changed to 2563 g.

With 100 g of this modified epoxy resin (I) was mixed 16 g of the curing agent (b) used in Example 26, and the mixture was treated in the same manner as in Example 26 to obtain a cured product.

The results obtained in the measurement of the cured product were as shown in Table 9.

Example 28

The modified epoxy resin (I) having an epoxy equivalent of 2480 g was prepared by repeating Example 26

except that the amounts of bisphenol type epoxy resin, bisphenol A and ε-caprolactone used therein were changed to 500 g, 141 g and 2563 g, respectively.

With 100 g of this modified epoxy resin (I) was mixed 6 g of the curing agent (b) used in Example 26, and the mixture was treated in the same manner as in Example 26 to obtain a cured product.

The results obtained in the measurement of the cured product were as shown in Table 9.

Example 29

The modified epoxy resin (I) having an epoxy equivalent of 1660 g was prepared by repeating Example 26 except that the amounts of bisphenol A and ε-caprolactone used therein were changed to 774 g and 2774 g, respectively.

With 100 g of this modified epoxy resin (I) was mixed 9 g of the curing agent (b) used in Example 26, and the mixture was treated in the same manner as in Example 26 to obtain a cured product.

The results obtained in the measurement of the cured product were as shown in Table 9.

Example 30

Example 26 was repeated except that in place of the system comprising 4-methyl-1,2,3,6-tetrahydrophthalic anhydride and 2,4,6-tris(dimethylaminomethyl)phenol used

therein as the curing agent, there was used 35 g of a curing agent prepared by adding 1 part by weight of 2,4,6-tris(dimethylaminomethyl)phenol to 100 parts by weight of dodecenylsuccinic anhydride.

The results obtained in the measurement of the cured product were as shown in Table 9.

Example 31

The modified epoxy resin (I) having an epoxy equivalent of 880 g/equiv. was prepared by repeating Example 30 except that in place of the bisphenol A type epoxy resin and bisphenol A used therein, there were used 2000 g of an epoxy resin (epoxy equivalent 173 g/equiv.) obtained by glycidylation of 1,1-bis(4-hydroxyphenyl) ethane with epichlorohydrin and 591 g of 1,1-bis(4-hydroxyphenyl)ethane, respectively and the amount of ε-caprolactone used therein was changed to 2591 g,

With 100 g of this modified epoxy resin (I) was mixed 27 g of the curing agent (b) used in Example 30, and the mixture was treated in the same manner as in Example 30 to obtain a cured product.

The results obtained in the measurement of the cured product were as shown in Table 9.

Example 32

The modified epoxy resin (I) having an epoxy equivalent of 1210 g/equiv. was prepared by repeating

Example 30 except that in place of the bisphenol type epoxy resin and bisphenol A used therein, there were used 2000 g of an epoxy resin (epoxy equivalent 205 g/equiv.) obtained by glycidilation of 1,1-bis(4-hydroxyphenyl)cyclohexane with epichlorohydrin and 699 g of 1,1-bis(4-hydroxyphenyl)cyclohexane, respectively and the amount of ε-caprolactone used therein was changed to 2699 g.

With 100 g of this modified epoxy resin (I) was mixed 27 g of the curing agent (b) as used in Example 30, and the mixture was treated in the same manner as in Example 30 to obtain a cured product.

The results obtained in the measurement of the cured product were as shown in Table 9.

Example 33

The modified epoxy resin (I) having an epoxy equivalent of 1100 g/equiv. was prepared by repeating Example 30 except that in place of the bisphenol A type epoxy resin and bisphenol A used therein, there were used an epoxy resin (epoxy equivalent 217 g/equiv.) obtained by glycidylation of 1,1-bis(4-hydroxyphenyl)-1-phenylethane with epichlorohydrin and 561 g of 1,1-bis(4-hydroxyphenyl)-1-phenylethane, respectively, and the amount of the ε-caprolactone used therein was changed to 2561 g.

With 100 g of the modified epoxy resin (I) was

mixed 22 g of the curing agent (b) used in Example 30, and the mixture was treated in the same manner as in Example 30 to obtain a cured product.

The results obtained in the measurement of the cured product were as shown in Table 9.

Example 34

The modified epoxy resin (I) having an epoxy equivalent of 970 g/equiv. was prepared by repeating Example 30 except that in place of the bisphenol A used therein, there was used 617 g of bis(4-hydroxyphenyl)sulfone, and the amount of the ε-caprolactone used therein was changed to 2617 g.

Subsequently, a cured product was obtained in the same manner as in Example 30 except that the amount of the curing agent used therein, with which this modified epoxy resin (I) was mixed, was changed to 25 g.

The results obtained in the measurement of the cured product were as shown in Table 9.

Example 35

The modified epoxy resin (I) having an epoxy equivalent of 970 g/equiv. was prepared by repeating Example 30 except that in place of the bisphenol A type epoxy resin A used therein, there were used 2000 g of a hydrogenated bisphenol A type epoxy resin (epoxy equivalent 239 g/equiv.) and 366 g of bisphenol A. and the

amount of the ε-caprolactone used therein was changed to 2366.

A cured product was obtained in the same manner as in Example 30 except that the amount of the curing agent (b) used therein, with which this modified epoxy resin (I) was mixed, was changed to 25 g.

The results obtained in the measurement of the cured product were as shown in Table 9.

Example 36-37

Example 30 was repeated except that in place of the ε-caprolactone used therein, there were used such cyclic esters as shown in Table 9.

The results obtained in the measurement of the cured products were as shown in Table 9.

Example 38-39

Example 27 was repeated except that in place of the acid anhydride type curing agent used therein, there was used in such aromatic amine or polyamide type curing agent.

The results obtained in the measurement of the cured products were as shown in Table 9.

Example 40

This example shows the use of a reactive plasticizer which was incorporated into a vibrational damping composition.

Example 27 was repeated except that the amount of the curing agent used therein was changed to 7 g, and 30 g of Thiocol LP-3 (a product of Toray Thiocol K.K.) was used as a reactive plasticizer, whereby a cured product was obtained in the same manner as in Example 27.

The results obtained in the measurement of the cured product were as shown in Table 9.

Comparative Example 6

This example shows that a cured product formed from an epoxy resin which is not lactone-modified is not suitable for use as a vibrational damping material since the cured product exhibits not only $(T_{\eta})_{max}$ but also a low $\eta_{max}$ and $(\eta_s)_{max}$ at high temperature.

An epoxy resin having an epoxy equivalent of 465 was prepared by repeating Example 26 except that no ε -caprolactone was used.

With 100 g of the thus obtained epoxy resin was mixed 32 g of the curing agent used in Example 26, and the mixture was treated in the same manner as in Example 26 to obtain a cured product.

The results obtained in the measurement of the cured product were as shown in Table 9.

The vibrational damping material of this example is apparently inferior in damping function by comparison with those of the foregoing examples 26-40.

Comparative Example 7

This example shows that when $(T\eta)max$ of a cured product is lowered to in the vicinity of a temperature at which a vibrational damping material is generally used, values of TML and CVCM become very large.

Comparative Example 6 was repeated except that 150 g of an aromatic polymerized oil [viscosity 500 cps ($25^{O}C$), heat loss of less than 0.1% by weight ($105^{O}C$ x 3 hr), and flash point of at least $180^{O}C$] was incorporated as a plasticizer into the epoxy resin used therein.

The cured product obtained thereby had $\eta_{max}$ of 1.4, $(T\eta)_{max}$ of $35^{O}C$, $(\eta s)_{max}$ of 0.8, TML of 47.8% by weight and CVCM of 7.3% by weight.

Table 9

| Example | Epoxy resin (a) | | |
|---|---|---|---|
| | Starting epoxy resin | | |
| | Kind | Epoxy equivalent (g/equivalent) | Amount used (g) |
| 26 | Bisphenol A type epoxy resin | 188 | 2000 |
| 27 | 〃 | 188 | 2000 |
| 28 | 〃 | 188 | 500 |
| 29 | 〃 | 188 | 2000 |
| 30 | 〃 | 188 | 2000 |
| 31 | 1,1-bis(4-Hydroxyphenyl)ethane glycidylated with epichlorohydrin | 173 | 2000 |
| 32 | 1,1-bis(Hydroxyphenyl)cyclohexane glycidylated with epichlorohydrin | 205 | 2000 |
| 33 | 1,1-bis(4-Hydroxyphenyl)-1-phenylethane glycidylated with epicholorhydrin | 217 | 2000 |
| 34 | Bis phenol A type epoxy resin | 188 | 2000 |
| 35 | Hydrogenated bisphenol A type epoxy resin | 239 | 2000 |
| 36 | Bisphenol A type epoxy resin | 188 | 2000 |
| 37 | 〃 | 188 | 2000 |
| 38 | 〃 | 188 | 2000 |
| 39 | 〃 | 188 | 2000 |
| 40 | 〃 | 188 | 2000 |
| Compar.Ex.6 | 〃 | 188 | 2000 |
| Compar.Ex.7 | 〃 | 188 | 2000 |

Table 9(continued)

| Example | Epoxy resin (a) Bisphenol Kind | Epoxy resin (a) Bisphenol Amount used (g) | Cyclic ester(c) Lactone Kind | Cyclic ester(c) Lactone Amount used (g) |
|---|---|---|---|---|
| 26 | Bisphenol A | 563 | ε-Caprolactone | 1098 |
| 27 | ″ | 563 | ″ | 2563 |
| 28 | ″ | 141 | ″ | 2563 |
| 29 | ″ | 774 | ″ | 2774 |
| 30 | ″ | 553 | ″ | 1098 |
| 31 | 1,1-bis(4-Hydroxyphenyl) ethane | 591 | ″ | 2591 |
| 32 | 1,1-bis(4-Hydroxyphenyl) cyclohexane | 699 | ″ | 2699 |
| 33 | 1,1-bis(4-Hydroxyphenyl) -1-phenylethane | 561 | ″ | 2561 |
| 34 | Bis(4-Hydroxyphenol) sulfone | 617 | ″ | 2617 |
| 35 | Bisphenol | 366 | ″ | 2366 |
| 36 | Bisphenol A | 563 | β-Propiolactone | 690 |
| 37 | ″ | 563 | δ-Valerolactone | 690 |
| 38 | ″ | 563 | ε-Caprolactone | 2563 |
| 39 | ″ | 563 | ″ | 2563 |
| 40 | ″ | 563 | ″ | 2563 |
| Compar.Ex. 6 | ″ | 563 | — | — |
| Compar.Ex. 7 | ″ | 563 | — | — |

Table 9 (Continued)

| Example | Epoxy resin (I) | | Curing agent (II) | |
|---|---|---|---|---|
| | Epoxy equivalent (g/equivalent) | Amount used (g) | Kind (Component) | Amount used (g) |
| 26 | 690 | 100 | 4-Methyl-1,2,3,6-tetrahydrophthalic anhydride 100 parts by weight, 2,4,6-tris (dimethylaminomethyl) phenol 1 part by weight | 22 |
| 27 | 960 | 100 | 〃 | 16 |
| 28 | 2480 | 100 | 〃 | 6 |
| 29 | 1660 | 100 | 〃 | 9 |
| 30 | 690 | 100 | Dodecenylsuccinic anhydride 100 parts by weight, 2,4,6-tris (dimethylaminomethyl) phenol 1 part by weight | 25 |
| 31 | 880 | 100 | 〃 | 26 |
| 32 | 1210 | 100 | 〃 | 21 |
| 33 | 1100 | 100 | 〃 | 22 |
| 34 | 965 | 100 | 〃 | 24 |
| 35 | 970 | 100 | 〃 | 25 |
| 36 | 960 | 100 | 〃 | 16 |
| 37 | 960 | 100 | 〃 | 16 |
| 38 | 960 | 100 | Aromatic amine type curing agent | 6 |
| 39 | 960 | 100 | Polyamideamine type curing agent | 11 |
| 40 | 960 | 100 | Curing agent used in Example 1 | 7 |
| Compar.Ex.6 | 465 | 100 | Curing agent used in Example 1 | 32 |
| Compar.Ex.7 | 465 | 100 | See the related description in the text | |

Table 9(Continued)

| Example | Vibration damping composition | | | | |
|---|---|---|---|---|---|
| | $\eta$ max | $(T\eta)$max °C | $(\eta_s)$max | T M L (wt.%) | C V C M (wt.%) |
| 26 | 1.1 | 75 | 0.6 | 2.5 | 0.42 |
| 27 | 1.2 | 40 | 0.7 | 2.7 | 0.45 |
| 28 | 1.5 | -5 | 0.8 | 2.9 | 0.48 |
| 29 | 1.3 | 20 | 0.7 | 2.6 | 0.43 |
| 30 | 1.4 | 20 | 0.8 | 2.8 | 0.47 |
| 31 | 1.4 | 15 | 0.7 | 2.7 | 0.46 |
| 32 | 1.4 | 30 | 0.8 | 2.6 | 0.45 |
| 33 | 1.4 | 40 | 0.8 | 2.6 | 0.43 |
| 34 | 1.4 | 40 | 0.8 | 2.7 | 0.44 |
| 35 | 1.5 | 10 | 0.9 | 2.8 | 0.46 |
| 36 | 1.2 | 30 | 0.6 | 2.9 | 0.48 |
| 37 | 1.2 | 25 | 0.6 | 2.8 | 0.47 |
| 38 | 1.3 | 15 | 0.7 | 2.8 | 0.48 |
| 39 | 1.1 | -5 | 0.6 | 2.9 | 0.49 |
| 40 | 1.5 | -10 | 0.8 | 3.2 | 0.51 |
| Compar.Ex.6 | 0.9 | 140 | 0.4 | 2.6 | 0.48 |
| Compar.Ex.7 | 1.4 | 35 | 0.8 | 47.8 | 7.3 |

Example 41

To 100 g of 1,6-hexandiol diglycidyl ether having an epoxy equivalent of 150 g/equiv. was added 100 g of a curing agent obtained by adding 1 part by weight of 2,4,6-tris(dimethylaminomethyl)phenol to 100 parts by weight of 4-methyl-1,2,3,6-tetrahydrophthalic anhydride, and the mixture was throughly mixed at room temperature to prepare a vibrational damping composition.

The thus obtained vibrational damping composition was cured under the curing conditions of 120°C x 3hr to obtain a vibrational damping material. The vibrational damping material thus obtained was measure in the same manner as in Example 1 for loss factor $\eta$, volatile component, tensile strength at rupture, tensional elogation at rupture, elastic modulus in tension, compression strength, Izod impact strength and resistance to chipping on bending thereof.

The results obtained are shown in Table 10.

Example 42-47

Example 41 was repeated except that in place of the 1,6-hexanediol glycycidyl ether used therein, there were used such epoxy resins as shown in Table 10.

The results obtained are shown in Table 10.

Table 10

| Example | Epoxy resin | | Amount of curing agent used | Tensile strength at rupture | Tensile elongation at rupture | Elastic modulus in tensile | Compression strength | Izod impact strength | Resistance to chipping |
|---|---|---|---|---|---|---|---|---|---|
| | Kind | Epoxy equivalent (g/equiv.) | (g) | ($kgf/mm^2$) | (%) | ($kgf/mm^2$) | ($kgf/mm^2$) | ($kgf/mm^2$) | |
| 41 | 1,6-Hexanediol diglycidyl ether | 150 | 100 | 1.23 | 110 | 2.01 | at least 35 | Not ruptured | Came up to standard |
| 42 | Diethylene glycol diglycidyl ether | 195 | 78 | 1.15 | 140 | 1.84 | at least 35 | 10.4 | Came up to standard |
| 43 | Tripropylene glycol diglycidyl ether | 172 | 88 | 0.314 | 100 | 0.319 | 17.1 | Not ruptured | Came up to standard |
| 44 | Tripropylene glycol diglycidyl ether | 180 | 84 | 0.340 | 120 | 0.357 | 14.3 | Not ruptured | Came up to standard |
| 45 | Glycerol polyglycidyl ether | 145 | 104 | 0.576 | 130 | 0.782 | 18.3 | 25.3 | Came up to standard |
| 46 | Diglycerol polyglycidyl ether | 155 | 98 | 0.452 | 130 | 0.643 | 27.8 | 18.4 | Came up to standard |
| 47 | Polytetramethylene glycol diglycidyl ether | 557 | 27 | 0.323 | 150 | 0.358 | at least 35 | Not ruptured | Came up to standard |

Table 10 (continued)

| Example | TML (wt.%) | CVCM (wt.%) | [illegible] max | (T[illegible]) max | ([illegible] s) max |
|---|---|---|---|---|---|
| 41 | 3.2 | 0.65 | 1.4 | 55 | 0.51 |
| 42 | 3.1 | 0.52 | 1.4 | 45 | 0.51 |
| 43 | 3.3 | 0.58 | 1.7 | 50 | 0.53 |
| 44 | 2.9 | 0.49 | 1.6 | 40 | 0.52 |
| 45 | 3.1 | 0.55 | 1.4 | 40 | 0.52 |
| 46 | 3.0 | 0.51 | 1.5 | 35 | 0.53 |
| 47 | 2.7 | 0.45 | 1.6 | 25 | 0.53 |

Example 48

Example 43 was repeated except that in place of the during agent used therein, there was used 140 g of a curing agent obtained by adding 1 parts by weight of 2,4,6-tris(dimethylaminomethyl)phenol to 100 parts by weight of dodecenyl succinic anhydride.

The results obtained are shown in Table 11.

Example 49

Example 48 was repeated except that in place of the epoxy resin used therein, there was used a mixture comprising 50 g of dipropylene glycol diglycidyl ether and 50 g of tripropylene glycol diglycidyl ether, and the amount of the curing agent used therein was changed to 136 g.

The results obtained are shown in Table 11.

Table 11

| Example | Tensile strength at rupture ($kgf/mm^2$) | Tensile elongation at rupture (%) | Elastic modulus in tensile ($kgf/mm^2$) | Compression strength ($kgf/mm^2$) | Izod impact strength ($kgf/mm^2$) | Resistance to chipping | TMS (wt.%) | CVCM (wt.%) | $\eta_{max}$ | $(T\eta)_{max}$ | $(\eta_s)_{max}$ |
|---|---|---|---|---|---|---|---|---|---|---|---|
| 48 | 0.149 | 49 | 0.258 | 0.92 | Not ruptured | Came up to standard | 3.1 | 0.52 | 1.5 | 35 | 0.52 |
| 49 | 0.126 | 56 | 0.234 | 0.85 | Not ruptured | Came up to standard | 3.0 | 0.51 | 1.5 | 30 | 0.52 |
| 50 | 0.073 | 71 | 0.105 | 0.72 | Not ruptured | Came up to standard | 3.7 | 0.73 | 1.7 | 15 | 0.54 |

Example 50

Example 49 was repeated except that the amount of the curing agent used therein was changed to 106 g.

The results obtained are shown in Table 11.

Example 51-52

There examples show the cases wherein curing agents other than acid anhydrides were used. Example 44 was repeated except that the kind and amount of the curing agent used therein were changed to those as shown in Table 12.

The results obtained are shown in Table 12.

Table 12

| Example | Curing agent: Kind | Curing agent: Amount used (g) | Tensile strength at rupture ($kgf/mm^2$) | Tensile elongation at rupture (%) | Elastic modulus in tensile ($kgf/mm^2$) | Compression strength ($kgf/mm^2$) | Izot impact strength ($kgf/mm^2$) | Resistance to Cipping | TML (wt.%) | CVCM (wt.%) | $\eta_{max}$ | $(T_\eta)_{max}$ | $(\zeta_s)_{max}$ |
|---|---|---|---|---|---|---|---|---|---|---|---|---|---|
| 51 | Aromatic amine Q-643 (a product of Mitsui Petrochemical Industries,Ltd.) | 26 | 0.304 | 140 | 0.381 | 12.7 | Not ruptured | Came up to standard | 3.0 | 0.52 | 1.5 | 25 | 0.53 |
| 52 | Polyamideamine Q-654 (a product of Mitsui Petrochemical Industries,Ltd.) | 56 | 0.254 | 170 | 0.298 | 9.4 | Not ruptured | Came up to standard | 3.1 | 0.54 | 1.4 | -5 | 0.52 |

What is claimed is:

1. A vibrational damping composition characterized by containing (a-1) an epoxy resin, (b) a curing agent and (c-1) a liquid polymer having in the molecule on the average more than 1.6 functional groups capable of reacting with the epoxy group of the epoxy type resin, said functional group being at least one selected from the group consisting of carboxyl group, acid anhydride radical, amino group and mercapto group, and a glass transition temperature of less than $0^{o}C$.

2. The vibrational damping composition as claimed in claim 1 wherein the epoxy type resin (a-1) is glycidyl ether of bisphenol A, glycidyl ether of bisphenol F or glycidyl ether of bisphenol AD.

3. The vibrational damping composition as claimed in claim 1 wherein the curing agent (b) is amines, acid anhydrides, polyamides or dicyandiamide.

4. The vibrational damping composition as claimed in claim 1 wherein the liquid polymer is a butadiene/acrylonitrile copolymer having carboxyl or amino terminals.

5. The vibrational damping composition as claimed in claim 1 wherein the liquid polymer is a maleic anhydride-grafted ethylene/α-olefin copolymer.

6. A vibrational damping composition characterized

by containing (a-2) an epoxy resin comprising glycidyl ether or polyol or its polymer, (b) a curing agent and (c-2) a compound comprising a polymer consist essentially of aromatic hydrocarbons, phenols or at least one thereof and having a softening point of less than 25°C.

7. The vibrational damping composition as claimed in claim 6 wherein the epoxy resin (a-2) is ethylene glycol diglycidyl ether, diethylene glycol diglycidyl ether, dipropylene glycol diglycidyl ether, 1,6-hexanediol diglycidyl ether, glycerol polyglycidyl ether, diglycerol polyglycidyl ether or polytetramethylene glycol diglycidyl ether.

8. The vibrational damping composition as claimed in claim 6 wherein the curing agent (b) is amines, acid anhydrides, polyamides or dicyandiamide.

9. The vibrational damping composition as claimed in claim 6 wherein the compound (c-2) is a condensate of xylene with formaldehyde, isopropenyltoluene polymer, phenol-modified aromatic polymerized oil, tricyclodedecene/toluene polymer or nonylphenol, the softening point of which is less than 25°C.

10. A vibrational damping composition characterized by containing an epoxy resin (I) obtained by addition reaction of (a-3) a bisphenol type epoxy resin represented by the following general formula with (c-3) a cyclic ester

at the (c-3)/(a-3) weight ratio of 20/80 to 98/2 and (b) a curing agent, the (b)/(I) equivalent weight ratio of said epoxy resin (I) to said curing agent (b) being in the range of from 0.6 to 1.4.

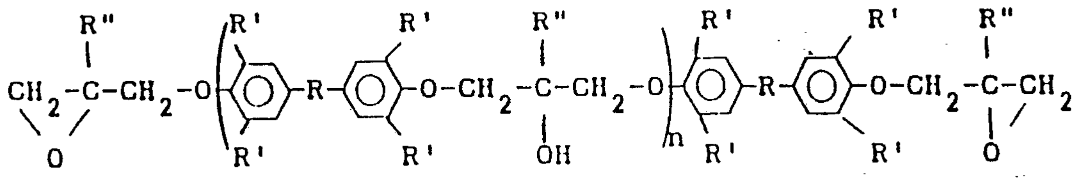

wherein R is 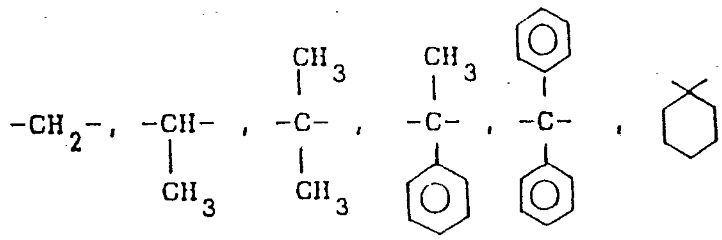 ,

-O- or 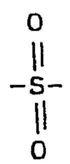 , R' is hydrogen atom or halogen atom, R" is hydrogen atom or methyl and n is an integer of 1 or more, provided that parts of whole of the benzene rings may be hydrogenated.

11. The vibrational damping composition as claimed in claim 10 wherein the bisphenol type resin (a-3) is glycidyl ether of bisphenol A, glycidyl ether of bisphenol F, glycidyl ether of 1,1-bis(4-hydroxyphenyl)ethane, glycidyl ether of 1,1-bis(4-hydroxyphenyl)cyclohexane, glycidyl ether of 1,1-bis(4-hydroxyphenyl)-1-phenylethane or glycidyl ether of (4-hydroxyphenyl)sulfone.

12. The vibration damping composition as claimed in claim 10 wherein the cyclic ester (c-3) is β-propiolactone, δ -valerolactone or ε -caprolactone.

13. The vibrational damping composition as claimed in claim 1 wherein the curing agent (b) is amines, acid anhydrides, polyamides or dicyandiamide.

14. A vibrational damper obtained by reacting (a-2) an epoxy resin comprising polyglycidyl ether of polyol or its polymer with (b) a curing agent followed by curing, which vibrational damper is characterized that it has a maximum value of a loss factor η being at least 1.3, a tensile strength at rupture, elongation and elastic modulus in tension according to JIS K7113 being 0.05-3.0 $kgf/mm^2$, 20-300% and 0.1-5.0 $kgf/mm^2$, respectively, a compression strength according to JIS K6911 being 0.5 $kgf/mm^2$, and Izod impact strength according to JIS K6911 being at least 5 kgf cm/cm.

15. The vibrational damper as claimed in claim 14 wherein the epoxy resin (a-2) is ethylene glycol diglycidyl ether, diethylene glycol diglycidyl ether, dipropylene glycol diglycidyl ether, 1,6-hexanediol diglycidyl ether, glycerol polyglycidyl ether, diglycerol polyglycidyl ether or polytetramethylene glycol glycidyl ether.

16. The vibrational damper as claimed in claim 14

wherein the curing agent (b) is amines, acid anhydrides, polyamides or dicyandiamide.

# INTERNATIONAL SEARCH REPORT

International Application No PCT/JP88/00076

**I. CLASSIFICATION OF SUBJECT MATTER** (if several classification symbols apply, indicate all) [3]

According to International Patent Classification (IPC) or to both National Classification and IPC

Int.Cl[4] C09K3/14

**II. FIELDS SEARCHED**

Minimum Documentation Searched [4]

| Classification System | Classification Symbols |
|---|---|
| IPC | C09K3/14 |

Documentation Searched other than Minimum Documentation to the Extent that such Documents are Included in the Fields Searched [5]

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| X | JP, A, 54-86562 (The Yokohama Rubber Co., Ltd.) 10 July 1979 (10. 07. 79) Claim, page 4, upper left column, line 1 to page 5, lower left column, last line (Family: none) | 1-5, 6-9 |
| X | JP, A, 57-92040 (Hoechst A.G.) 8 June 1982 (08. 06. 82) Claim, page 3, lower right column, last line to page 4, lower right column, last line & EP, A, 49859 & DE, A, 3038471 & BR, A, 8106552 & US, A, 4385139 & EP, B, 49859 & DE, G, 3170943 | 1-5 |
| X | JP, A, 59-176358 (Nitto Electric Industrial Co., Ltd.) 5 October 1984 (05. 10. 84) Claim, page 2, upper left column, line 11 to page 2, lower right column, line 3, page 3, lower right column, line 5 to page 4, lower column, last line | 1-5 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| March 30, 1988 (30. 03. 88) | April 11, 1988 (11. 04. 88) |
| International Searching Authority [1] | Signature of Authorized Officer [20] |
| Japanese Patent Office | |

International Application No. PCT/JP88/00076

**FURTHER INFORMATION CONTINUED FROM THE SECOND SHEET**

| | | |
|---|---|---|
| | (Family: none) | |
| X | JP, A, 61-34086 (Toray Industries, Inc.) 18 February 1986 (18. 02. 86) Claim, page 2, upper right column, line 7 to page 3, lower right column, last line, page 5, upper column, line 1 to page 9, upper column, last line (Family: none) | 1-5 |
| X | JP, A, 61-103977 (Toray Industries, Inc.) 22 May 1986 (22. 05. 86) Claim, page 2, upper right column, line 9 to page 3, lower left column, line 10, | 1-5 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers.........., because they relate to subject matter [12] not required to be searched by this Authority, namely:

2.☐ Claim numbers.........., because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP88/00076

**FURTHER INFORMATION CONTINUED FROM THE SECOND SHEET**

| | | |
|---|---|---|
| | page 5, upper column, line 1 to page 8, lower column, last line (Family: none) | |
| X | JP, A, 62-64854 (Ube Industries, Ltd.) 23 March 1987 (23. 03. 87) Claim, page 2, upper left column, line 17 to page 3, upper right column, line 14, page 4, lower right column, line 1 to page 4, lower right column, last line (Family: none) | 1-5 |
| Y | JP, A, 60-190351 (Toray Industries, Inc.) 27 September 1985 (27. 09. 85) | 1-5 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers__________, because they relate to subject matter [12] not required to be searched by this Authority, namely:

2.☐ Claim numbers__________, because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP88/00076

FURTHER INFORMATION CONTINUED FROM THE SECOND SHEET

| | | |
|---|---|---|
| | Claim (Family: none) | |
| Y | JP, A, 60-215013 (NEC Corporation) 28 October 1985 (28. 10. 85) Claim, page 2, lower right column, line 18 to page 4, upper right column, last line (Family: none) | 1-5 |
| Y | JP, A, 60-245550 (Bridgestone Corporation) 5 December 1985 (05. 12. 85) Claim, page 2, lower left column, line 5 to page 3, upper right column, last line (Family: none) | 1-5 |

V.☐ OBSERVATIONS WHERE CERTAIN CLAIMS WERE FOUND UNSEARCHABLE[10]

This international search report has not been established in respect of certain claims under Article 17(2) (a) for the following reasons:

1.☐ Claim numbers.........., because they relate to subject matter[12] not required to be searched by this Authority, namely:

2.☐ Claim numbers.........., because they relate to parts of the international application that do not comply with the prescribed requirements to such an extent that no meaningful international search can be carried out[13], specifically:

VI.☐ OBSERVATIONS WHERE UNITY OF INVENTION IS LACKING[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP88/00076

FURTHER INFORMATION CONTINUED FROM THE SECOND SHEET

| | | |
|---|---|---|
| Y | JP, A, 54-141101 (Boeicho Gijutsu Kenkyu Honbu-cho)<br>2 November 1979 (02. 11. 79)<br>Claim, page 4, upper left column, line 2 to page 4, upper right column, line 2<br>(Family: none) | 14-16 |
| Y | JP, A, 59-191713 (NEC Corporation)<br>30 October 1984 (30. 10. 84)<br>Claim, page 2, lower right column, line 1 to page 2, lower right column, line 14<br>& NO, A, 8401097 | 14-16 |

V.☐ OBSERVATIONS WHERE CERTAIN CLAIMS WERE FOUND UNSEARCHABLE [10]

This international search report has not been established in respect of certain claims under Article 17(2) (a) for the following reasons:

1.☐ Claim numbers............ because they relate to subject matter [12] not required to be searched by this Authority, namely:

2.☐ Claim numbers............ because they relate to parts of the international application that do not comply with the prescribed requirements to such an extent that no meaningful international search can be carried out [13], specifically:

VI.☐ OBSERVATIONS WHERE UNITY OF INVENTION IS LACKING [11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP88/00076

FURTHER INFORMATION CONTINUED FROM THE SECOND SHEET

| | | |
|---|---|---|
| Y | JP, A, 61-40150 (Sumitomo Metal Industries, Ltd.)<br>26 February 1986 (26. 02. 86)<br>Claim, page 3, upper right column, line 11 to page 4, lower left column, line 18<br>(Family: none) | 14-16 |

V. ☐ OBSERVATIONS WHERE CERTAIN CLAIMS WERE FOUND UNSEARCHABLE[10]

This international search report has not been established in respect of certain claims under Article 17(2) (a) for the following reasons:

1.☐ Claim numbers__________, because they relate to subject matter[12] not required to be searched by this Authority, namely:

2.☐ Claim numbers__________, because they relate to parts of the international application that do not comply with the prescribed requirements to such an extent that no meaningful international search can be carried out[13], specifically:

VI. ☐ OBSERVATIONS WHERE UNITY OF INVENTION IS LACKING[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.